# EUROPEAN PATENT APPLICATION

(11) **EP 4 682 703 A1**
(43) Date of publication of application: **21.01.2026**
(21) Application number: 25189066.1
(22) Date of filing: 11.07.2025
(51) Int. Cl.: G06F 3/12, G06Q 20/22, G06Q 30/01

(54) **MANAGEMENT SYSTEM, SERVER, AND MULTI-FUNCTION PERIPHERAL**

(30) Priority: 12.07.2024 JP 2024112469
(71) Applicant: BROTHER KOGYO KABUSHIKI KAISHA, Nagoya-shi, Aichi 467-8561 (JP)
(72) Inventor: YAMADA, TAKATSUGU, Nagoya, 467-8562 (JP)
(74) Representative: J A Kemp LLP

(57) **Abstract**

A management system includes: a multi-function peripheral; a server which manages a service related to the multi-function peripheral and including a plurality of plans; and a communication interface. The server transmits, to the multi-function peripheral via the communication interface, a setting instruction to set a function of the multi-function peripheral to be enabled in accordance with a plan for which a user of the multi-function peripheral applied. Further, the multi-function peripheral receives the setting instruction via the communication interface, and sets the function in accordance with the plan to be enabled, based on the received setting instruction.

## Description

### TECHNICAL FIELD

The present invention relates to a management system, a server, and a multi-function peripheral.

### BACKGROUND ART

A system providing a delivery service for consumable items is known, as described, for example, in Patent Literature 1. The system described in Patent Literature 1 includes a service providing server and a printer. In the system described in Patent Literature 1, the printer transmits use starting request information to the server, and the server, upon receiving the use starting request information, executes a use starting process, and transmits status information including contract status to the printer. Upon receiving the status information, the printer determines that the service is currently contracted and that the fee for the service has been paid. Thus, the printer sets a function, which has been disabled, to be enabled.

### Citation list

[Patent Literature] Patent Literature 1: Japanese Patent No. JP 7363371

### SUMMARY

### Problem to be solved by the invention

However, the system as described above does not have settings for functions in accordance with the content of the plan of the service in a case where the printer is a multi-function peripheral. Therefore, settings to enable functions based on the content of the plan cannot be properly performed in the multi-function peripheral.

In view of the above issue, an object of the present disclosure is to provide a management system, a server, and a multi-function peripheral each capable of appropriately performing settings to enable functions based on the content of the plan in the multi-function peripheral.

### Solution to the problem

According to an aspect of the present disclosure, a management system is provided. The management system includes: a multi-function peripheral; a server, a service related to the multi-function peripheral being managed by the server, the service including a plurality of plans; and a communication interface. The server is configured to execute an instruction transmitting process of transmitting, to the multi-function peripheral via the communication interface, a setting instruction to set at least one function of the multi-function peripheral to be enabled in accordance with a plan, of the plurality of plans, for which a user of the multi-function peripheral applied. The multi-function peripheral is configured to execute: an instruction receiving process of receiving the setting instruction transmitted in the instruction transmitting process, via the communication interface; and a setting process of setting the at least one function to be enabled, based on the setting instruction received in the instruction receiving process.

According to the management system of this aspect, in the setting process, the at least one function included in the multi-function peripheral and corresponding to the plan for which the user applied is set to be enabled. Therefore, in the multi-function peripheral, the setting of enabling the function based on the content of the plan can be performed appropriately. In other words, a function set to be enabled can be switched appropriately, in accordance with the plan for which the user applied.

According to another aspect of the present disclosure, a server for managing a service related to a multi-function peripheral is provided. The service includes a plurality of plans. In a management system including the multi-function peripheral and a communication interface, the server is configured to execute: an instruction transmitting process of transmitting, to the multi-function peripheral via the communication interface, a setting instruction to set at least one function of the multi-function peripheral to be enabled according to a plan, of the plurality of plans, for which a user of the multi-function peripheral applied.

According to the server of this aspect, the setting to enable the function based on the content of the plan can be performed appropriately.

According to yet another aspect of the present disclosure, a multi-function peripheral included in a management system is provided. The management system includes a server for managing a service related to the multi-function peripheral, the service including a plurality of plans; and a communication interface. The multi-function peripheral is configured to execute: an instruction receiving process of receiving a setting instruction transmitted from the server via the communication interface, the setting instruction being an instruction to the multi-function peripheral to set at least one function of the multi-function peripheral to be enabled in accordance with a plan, of the plurality of plans, for which a user of the multi-function peripheral applied; and a setting process of setting the at least one function to be enabled, based on the setting instruction received in the instruction receiving process.

According to the multi-function peripheral of this aspect, the setting to enable the function based on the content of the plan can be performed appropriately.

### BRIEF DESCRIPTION OF DRAWINGS

FIG. 1 is a block diagram depicting the schematic configuration of a management system in an embodiment of the present disclosure.
FIG. 2 depicts a memory table stored in a server.
FIGs. 3A and 3B illustrate a flowchart indicating a main process.
FIG. 4 depicts a memory table stored in the server.
FIGs. 5A and 5B illustrate a flowchart indicating a plan changing process.
FIG. 6 illustrates a flowchart indicating a notifying process based on usage history.
FIG. 7 illustrates a flowchart indicating a supporting process based on error information.

### DESCRIPTION OF THE EMBODIMENT

In the following, an embodiment will be described based on the drawings.

### Embodiment

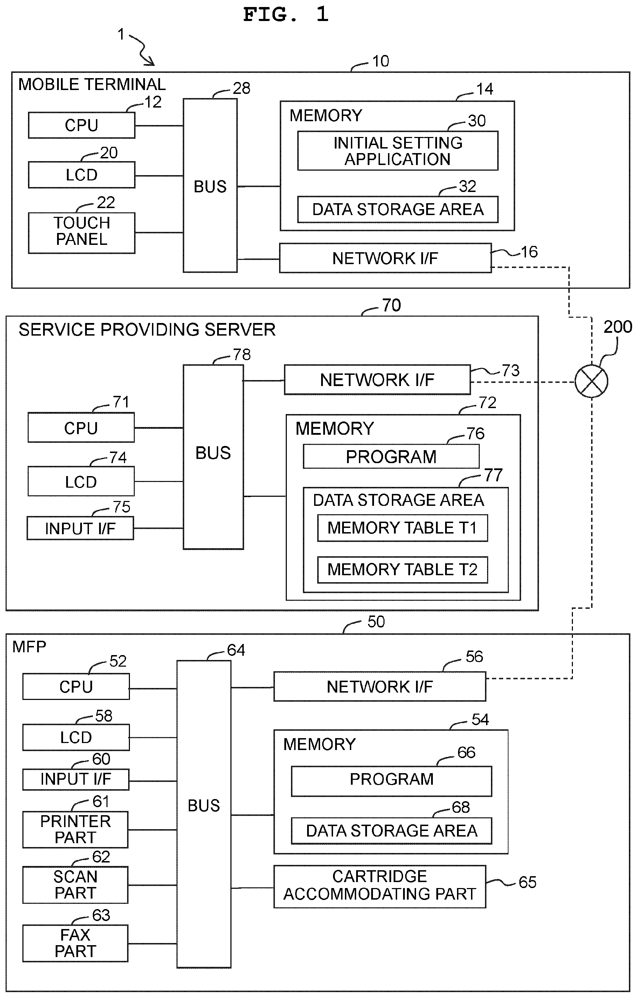

A management system 1 of the embodiment of the present disclosure is described, with reference to FIG. 1 to FIG. 7.

### Overall Configuration of Management System 1

FIG. 1 depicts the schematic configuration of the management system 1 according to the embodiment of the present disclosure. As depicted in FIG. 1, the management system 1 includes a mobile terminal 10, an MFP 50, and a service providing server 70 (hereinafter also referred to simply as the "server 70"). The mobile terminal 10 is an external terminal owned by the user. The term "MFP" is an abbreviation of Multi-Function Peripheral. The control system 1 is a system which comprehensively manages, using the server 70, a service related to the MFP 50.

Here, the term "service" refers to, for example, a delivery service which delivers a consumable item used in the MFP 50, a charging service which charges (the recipient of the service, i.e. the user) based on the number of printed sheets of a print medium, and a rental service which rents the MFP 50 itself as a rental item. The services include a plurality of plans. In the present embodiment, the user uses the rental service of the MFP 50 and further selects a plan, among a plurality of plans in each of which available function(s) in the MFP 50 is set.

The term "plan" defines, for example, the scope, the quality, the available benefit and function(s), and the price all of which the service to be provided. In the present embodiment, the term "plan" specifically defines the availability of the four kinds of image processing functions available in the MFP 50. The four kinds of image processing functions are copy function, print function, scan function and fax function. Note that the definition of the "plan" may include not only the availability of the image processing functions, but also the charge, the usage period, and the quality (accuracy) of the function to be made available. Further, the term "function(s)" may include not only the above-described four kinds of image processing functions, but also other functions which are available in the MFP 50, such as high quality image printing and high quality image reading.

In the present embodiment, the user makes an application for the service by selecting a plan from a dedicated application site, using the mobile terminal 10 owned by the user. Based on the content of a plan selected by the user, the service contract is concluded between the user and the service provider. Upon receiving the application, the server 70 transmits a setting instruction to the MFP 50. The setting instruction is an instruction to set a function, which is available in accordance with the plan, to be enabled. The MFP 50 receives the above-described setting instruction and, based on the content of the setting instruction, sets the function in accordance with the plan to be enabled. In other words, the restriction to the function is cancelled in accordance with the content of the plan. The details of a series of processes regarding the application for the plan, including transmitting and receiving processes of the above-described setting instruction, will be described later.

The mobile terminal 10 and the MFP 50 are connected to a network 200. The network 200 may be the Internet, a local area network (LAN), or a combination of the LAN and the Internet. Further, the network 200 may be constructed of wired communication, or wireless communication, or a combination of wired and wireless communication. In the present embodiment, the mobile terminal 10 and the MFP 50 are wirelessly connected to each other via a non-illustrated router which constructs a part of the network 200. Further, the service providing server 70 is also connected to the network 200.

The mobile terminal 10 mainly includes a CPU 12, a memory 14, a network I/F 16, an LCD 20, and a touch panel 22. The CPU 12, the memory 14, the network I/F 16, the LCD 20, and the touch panel 22 can communicate with one another via a bus 28. The mobile terminal 10 is, for example, a smart phone. Note that the mobile terminal 10 is not limited to the smartphone, and may be another terminal device such as a tablet or a laptop computer. The configuration of the mobile terminal 10 depicted in FIG. 1 is an example. For example, the mobile terminal 10 may include a mobile terminal communication I/F which performs wireless communication with a mobile base station, and a camera which performs image capture.

The CPU 12 executes a set-up process in accordance with an initial set-up application 30 in the memory 14. The initial set-up application 30 is not initially stored in the memory 14 of the mobile terminal 10. For example, the initial set-up application 30, which is stored on the service providing server 70, can be downloaded and installed by the mobile terminal 10, allowing the mobile terminal 10 to execute the initial set-up application 30. The initial set-up application 30 is, for example, an application program causing the mobile terminal 10 to execute the initial set-up of the MFP 50. The CPU 12 executing the initial set-up application 30 sets an administrator password of the MFP 50, sets the time of the MFP 50, and causes the LCD 20 to display an initial setting guide. Further, the memory 14 includes a data storage area 32. The data storage area 32 is an area configured to store data, etc., necessary for executing the initial set-up application 30.

The network I/F 16 is a communication interface which performs wired or wireless communication with the network I/F 56 of the MFP 50 connected to the network 200. The network I/F 16 includes a chip and a circuit compatible with the wired LAN and wireless LAN communication standards. For example, the mobile terminal 10 and the MFP 50 transmit and receive electronic data with each other via a wireless LAN of Wi-Fi (a registered trademark of Wi-Fi Alliance). Note that the communication system between the mobile terminal 10 and the MFP 50 is not particularly limited to the above-described communication system. For example, the mobile terminal 10 and the MFP 50 may communicate wirelessly via Bluetooth (a registered trademark of Bluetooth SIG) or via NFC (Near Field Communication: a registered trademark of NFC Forum).

The LCD 20 includes a display screen which displays various functions of the mobile terminal 10. The touch panel 22 has a touch sensor and is disposed to cover the display screen of LCD 20. The touch panel 22 detects proximity/contact of a finger of the user, a stylus, or another object and outputs an electrical signal in response to the detection.

The MFP 50 mainly includes a CPU 52, a memory 54, the network I/F 56, an LCD 58, an input I/F 60, a printer part 61, a scan part 62, a fax part 63, and a cartridge accommodating part 65. The CPU 52, the memory 54, the network I/F 56, the LCD 58, the input I/F 60, the printer part 61, the scan part 62, the fax part 63, and the cartridge accommodating part 65 are configured to be capable of communicating with one another via a bus 64.

The CPU 52 executes a process in accordance with a program 66 in the memory 54. The program 66 includes, for example, an application program for executing a printing process and a scanning process, and an application program for executing the initial set-up of the MFP 50 in accordance with the instruction by the initial set-up application 30 of the mobile terminal 10. The program 66 further includes, for example, an application program for a setting process enabling at least one function among a plurality of functions of the MFP 50, an application program for transmittance of identification information transmitting, to the server 70, the identification information identifying the MFP 50, an application program for transmittance of usage history for transmitting, to the server 70, information such as usage history of each of the functions in the MFP 50 and error in the MFP 50. Further, the memory 54 includes a data storage area 68. The data storage area 68 is an area configured to store, for example, data necessary for executing the program 66.

Note that each of the memory 54 of the MFP 50 and the memory 14 of the mobile terminal 10 is constructed of a combination of a RAM, a ROM, a flash memory, a HDD, and a buffer included in each of the CPUs 12 and 52. Each of the memory 54 of the MFP 50 and the memory 14 of the mobile terminal 10 may be a computer-readable storage medium. The computer-readable storage medium is a non-transitory medium. The non-transitory medium includes, for example, a storage medium such as a CD-ROM and a DVD-ROM, in addition to the above-described combination of the RAM, the ROM, the flash memory, the HDD, and the buffer included in each of the CPUs 12 and 52. Further, the non-transitory medium is a tangible medium. On the other hand, although an electrical signal which carries a program downloaded from a server on the Internet is a computer-readable signal medium as a kind of the computer-readable medium, the signal medium is not included in the storage medium which is non-transitory and computer-readable.

Further, the network I/F 56 of the MFP 50 is a communication interface configured to perform wired or wireless communication with the network I/F 16 of the mobile terminal 10 and a network I/F 73, of the service providing server 70, to be described later. The network I/F 56 includes a chip and a circuit compatible with the communication standards of the wired LAN and the wireless LAN.

The LCD 58 includes a display screen configured to display various functions of the MFP 50. The MFP 50 of the present embodiment includes, as a plurality of functions which the MFP 50 can execute, four image processing functions of copy, print, scan, and fax. Further, the input I/F 60 is, for example, a touch panel constructed integrally with the LCD 58 and receives an operation by the user with respect to an icon, a button, etc., displayed on the display screen of the LCD 58. Note that in addition to the touch panel, the input I/F 60 may also include a hard key.

The printer part 61 forms an image on a sheet (e.g., a paper sheet, OHP, etc.). The printer part 61 may include, for example, an exposure unit, a photosensitive body, a developing roller, and a fixing device, which are configured to execute printing based on the electrophotographic system. Alternatively, the printer part 61 may include, for example, an ink-jet head, a carriage, and a carriage-driving mechanism, which are configured to execute printing based on the ink-jet system. In a case where the MFP 50 receives a print instruction from the mobile terminal 10, the MFP 50 causes the printer part 61 to print an image based on image data for printing which is included in the received print instruction. The scan part 62 has a reading sensor configured to read an image from an original. In a case where the MFP 50 receives a scan instruction from the mobile terminal 10, the MFP 50 causes the scan part 62 to generate scan data and transmits the generated scan data to the mobile terminal 10. The fax part 63 executes a fax process in accordance with a predetermined protocol.

The cartridge accommodating part 65 is configured so that a cartridge which stores a colorant such as ink or toner for coloring the sheet is detachable and attachable with respect to the cartridge accommodating part 65. The cartridge accommodating part 65 includes a detecting sensor which detects in a case where a cartridge is attached to the cartridge accommodating part 65. Note that the MFP 50 may include a tank configured to store the colorant, rather than the cartridge accommodating part 65. The tank includes an inlet port. The user may pour a colorant from a bottle containing the colorant into the inlet port to cause the tank to store the colorant. Further, the tank may also include a detection sensor configured to detect whether the amount of colorant stored in the tank is at or above a threshold value.

The service providing server 70 mainly includes a CPU 71, a memory 72, the network I/F 73, an LCD 74, and an input I/F 75. The CPU 71, the memory 72, the network I/F 73, the LCD 74, and the input I/F 75 can communicate with one another via a bus 78. The CPU 71 executes a process in accordance with a program 76 in the memory 72. Further, the memory 72 includes a data storage area 77. The data storage area 77 is an area configured to store data necessary for the execution of the program 76.

The program 76 includes, for example, an application program for preparing a table in which various data are associated based on the plan of the user. Further, the program 76 includes an application program for preparing a setting instruction to set at least one function, of a plurality of functions included in the MFP 50, to be enabled, based on a received product serial number and the plan, and an application program for transmitting the above-described setting instruction to the MFP 50. The other configuration of the service providing server 70 is similar to the configuration included in the mobile terminal 10 or the MFP 50. The service providing server 70 manages the service which uses the MFP 50. More specifically, the service providing server 70 receives the application for the service regarding the MFP 50 and manages the MFP 50 so that the function(s) in accordance with the plan is (are) available.

The network I/F 16, the network I/F 56, and the network I/F 73 each correspond to an example of the "communication interface". The service providing server 70 corresponds to an example of a "server". The MFP 50 corresponds to an example of a "multi-function peripheral".

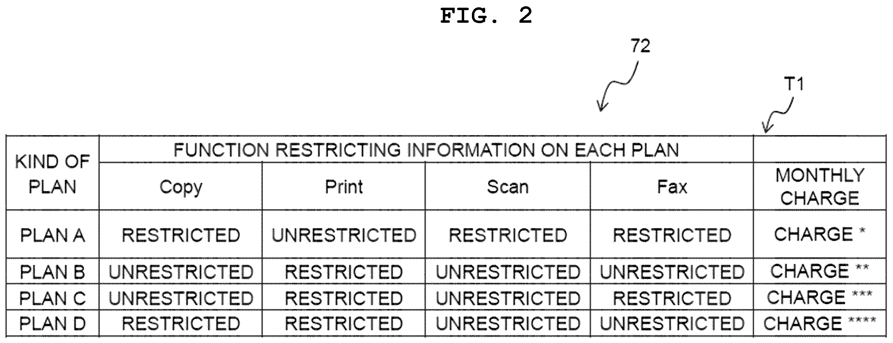

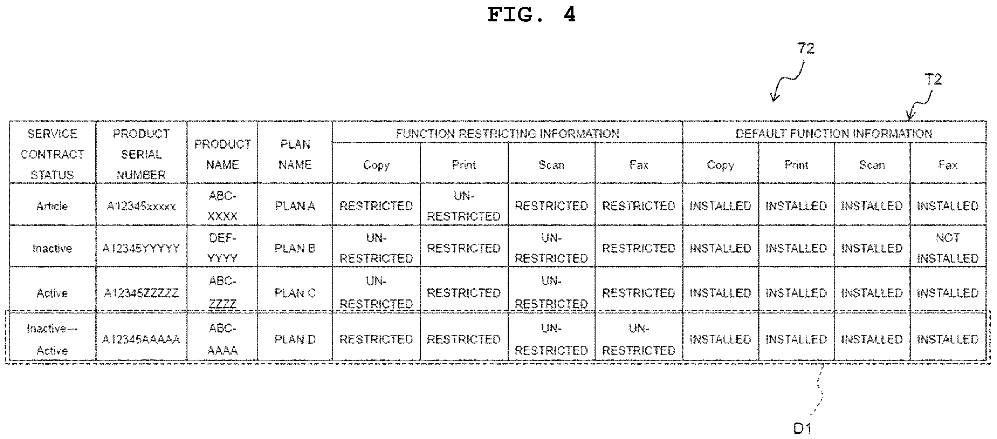

FIG. 2 depicts a memory table T1 stored in the server 70. The memory table T1 indicates information regarding the contents of each of the plurality of the plans. The memory table T1 is stored in the memory 72 of the server 70. As indicated in FIG. 2, the memory 72 stores a plan name indicating the kind of each of the plurality of plans, function restricting information for each of the plurality of plans, and a monthly charge for each of the plurality of plans, in association with one another. The plan name corresponds to an example of "plan information" indicating the plan. The function restricting information is information indicating whether each of the four image processing functions is to be restricted in a certain plan of the plurality of plans; in other words, the function restricting information is information indicating the function(s) available in the certain plan. The function restricting information corresponds to an example of "function information" indicating the function(s) available in the plan. The term "restrict" or "restricted" means that the function is set to be disabled so that the function is made unavailable, while the term "not restrict" or "unrestricted" means that the function is set to be enabled so that the function is made available in the MFP 50. Note that in FIG. 2 and in FIG. 4 to be described below, although the term "restricted" and the term "unrestricted" are indicated regarding the function restricting information, a predetermined restricting flag may be included so as to manage the function restricting information.

As depicted in FIG. 2, the present embodiment has four plans which are Plan A, Plan B, Plan C, and Plan D. In Plan A, only the print function is available. In Plan B, the copy function, the scan function and the fax function are available, whereas the print function is not available. In Plan C, the copy function and the scan function are available, whereas the print function and the fax function are not available. In Plan D, the scan function and the fax function are available, whereas the copy function and the print function are not available. Basically, the more the functions are available, the higher the monthly charge is set.

### Main Process

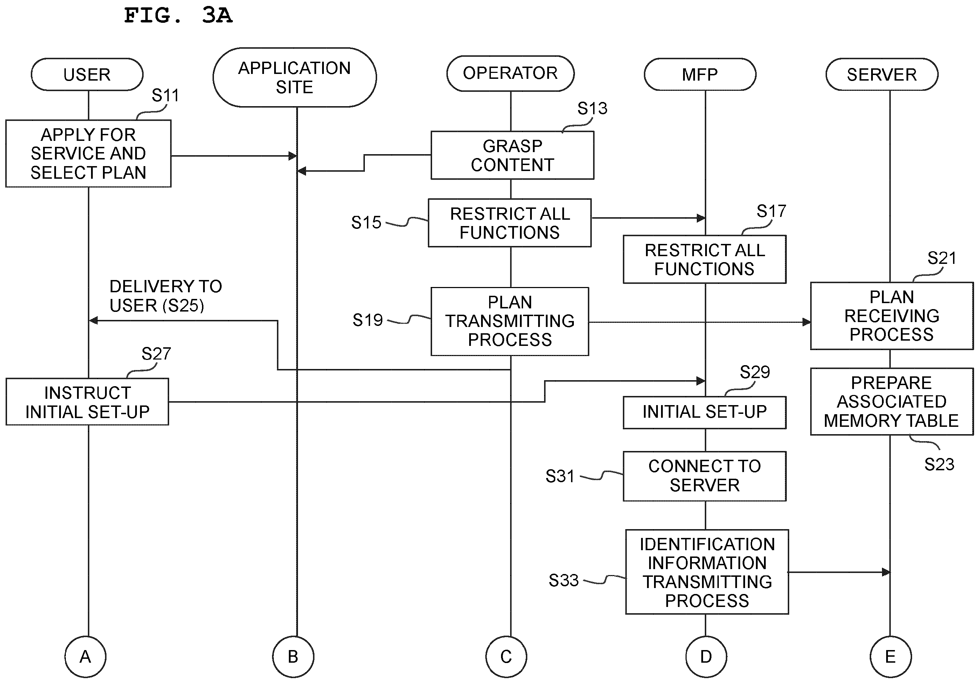

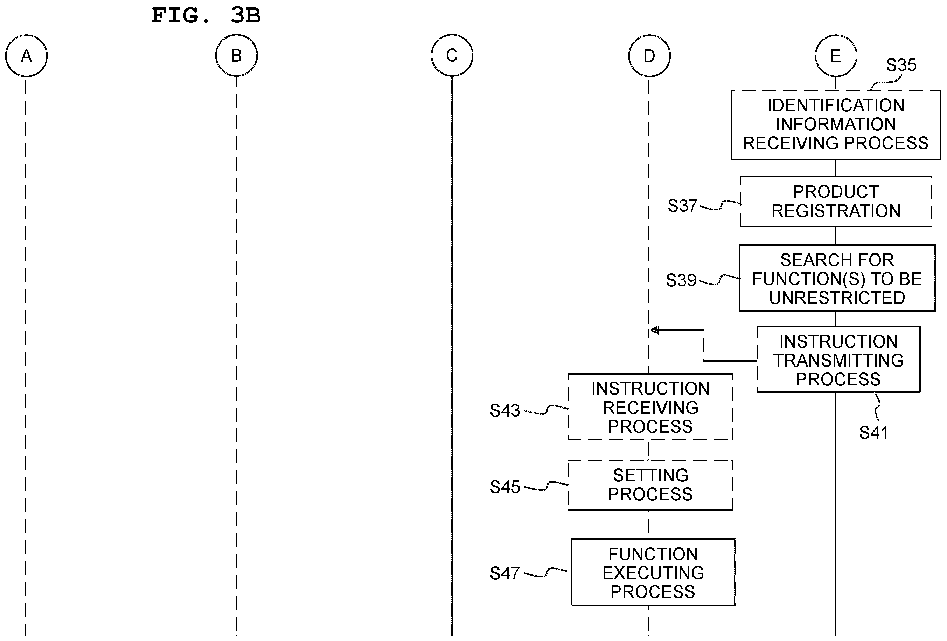

Next, a control process executed by the management system 1 configured as described above will be described, with reference to FIG. 3A to FIG. 7. FIGs. 3A and 3B illustrate a flowchart indicating a main process in which the management system 1 performs setting, with respect to the MFP 50, to enable a predetermined function, of the plurality of functions, in accordance with the plan based on the application for the plan from the user.

Note that the terms in the process such as "select", "instruct", "receive", "transmit", "set", "prepare", "update", "confirm", "determine", and "notify" in the description of the following flowcharts represent processes by any one of the CPU 12, the CPU 52 and the CPU 71 in accordance with commands described, respectively, in the program 66 and the program 76. The processes executed by each of the CPU 12, the CPU 52 and the CPU 71 include hardware control via the OS. Note that the term "obtain" is used as a concept in which a request is not indispensable. In other words, a process in which the application receives data without a request is also included in the concept of "the CPU obtains data". Further, the "data" in the present specification is expressed in a computer-readable format. Furthermore, multiple data having substantially the same meaning and content but in different formats are to be treated as the same data. This is applied similarly to "information" in the present specification.

The "user" uses the above-described mobile terminal 10 to execute the application for the service and the set-up of the MFP 50. Specifically, the CPU 12 of the mobile terminal 10 executes the various processes based on user operations via the touch panel 22. The "application site" is a dedicated portal site which presents the details of the plan to the user and receives the application for the service from the mobile terminal 10. An "operator" grasps the content of the application for the service from the user, then executes the setting of the MFP 50 and transmits plan information to the server 70. The operator is, for example, the developer or manufacturer of the MFP 50.

In FIGs. 3A and 3B, FIGs. 5A and 5B, FIG. 6, and FIG. 7, processes indicated in the "MFP" column are processes executed by the CPU 52 of the MFP 50. Processes indicated in the "server" column are processes executed by the CPU 71 of server 70. In the following description, the processes executed by each of the CPU 52, the CPU 71, etc., in accordance with the commands described, respectively, in the program 66 and the program 76 are described in abbreviated phrases, in some cases. For example, the description "the CPU 52 of the MFP 50 executes process A" is also described simply as "the MFP 50 executes process A". Further, the description "the CPU 71 of the server 70 executes process A" is also described simply as "the server 70 executes process A". Furthermore, although the transmission and receipt of data among the mobile terminal 10, the MFP 50, and the server 70 is executed via the network I/F 16, the network I/F 56, and the network I/F 73, the above-described process of transmission and receipt of data is described while omitting the phrase "via the network I/F".

As depicted in FIGs. 3A and 3B, the user first uses the mobile terminal 10 to access the application site for the service, and makes an application for a desired service and selection of a plan (step S11). Specifically, the user selects the product name of the MFP 50 which the user desires for the rental service and selects one desired plan from the plurality of plans corresponding to the product specification of the MFP 50. The operator uses a terminal to access the application site and grasps the content of the application from the user (step S13). Next, the operator operates the terminal or the MFP 50 to restrict all the functions of the MFP 50 which the user wishes to rent (step S15). The process in step S15 is executed to disable all the functions at this stage because the MFP 50 is a rental service item and a part of the functions might have been enabled in the previous rental usage. Based on the operation of the operator in step S15, the MFP 50 restricts all the functions executable in the MFP 50 (step S17).

Next, the operator uses the terminal to execute a plan transmitting process of transmitting the content grasped in step S13 to the server 70 (step S19). In the plan transmitting process, multiple information items that are the product serial number, the rental product name, and a plan name (information on the plan) of the rented MFP 50 are transmitted. The server 70 executes a plan receiving process of receiving the multiple information items that are the product serial number, the rental product name, and the plan name (the information on the plan) of the rented MFP 50 (step S21). Note that the content for which the user applied in step S11 may be received by the server 70 directly from the application site, not via the operator. Further, the functions of the application site and the functions of the operator may be managed together by the server 70.

Upon receiving the plan, the server 70 prepares a memory table T2 in which the MFP 50 rented by the user and the plan are associated with each other by using the multiple information items received in the plan receiving process and the function restricting information on each of the plurality of plans stored in the memory 72 in advance (memory table T1 depicted in FIG. 2) (step S23). Note that the memory table T2 may be automatically prepared by, for example, the program 76 stored in the memory 72 in advance.

FIG. 4 depicts the memory table T2 stored in the server 70. The memory table T2 indicates the information regarding the plan of the user for each MFP, including a service contract status, the product name, and the content of the plan. The memory table T2 is stored in the memory 72 of the server 70. As indicated in FIG. 4, the memory 72 stores, in association, the service contract status of the MFP 50, the product serial number of the MFP 50, the product name of the MFP 50, the plan name, the function restricting information indicating the function(s) available in the plan, and default function information on the product. Note that the default function information may not be stored in the memory 72.

The service contract status indicates whether the MFP 50 rented by the user is currently under contract. In a case where the MFP 50 is under contract, the service contract status is set to "Active"; on the other hand, in a case where the MFP 50 is not under contract, the service contract status is set to "Inactive". The initial value of the service contract status is "Inactive". The service contract status is set to "Active" in a case where the application from the user is received and the predetermined set-up is completed and then the MFP 50 is registered with the server 70 and the service contract is officially signed.

The product serial number is a unique serial number for identifying the MFP 50. The product serial number corresponds to an example of "multi-function peripheral identification information" which identifies the MFP 50. The product name is the name of the MFP 50 as a product, i.e., a so-called model number. The plan name is the name of the plan which the user has selected from the plurality of plans and regarding which the user applied for the service. The plan name corresponds to an example of the "plan information" indicating the plan of the multi-function peripheral identified by the multi-function peripheral identification number. The default function information is information indicating a function or functions installed in the MFP 50 as the product specification of the MFP 50. In the present embodiment, in a case where the plan is presented to the user, the user can select only a plan corresponding to the default function information on the selected MFP 50. In other words, in a case where the MFP 50 which the user wishes to rent has a function or functions not included in the MFP 50 as the standard function(s), only such a plan wherein the function restricting information indicates the function(s) not included in the MFP 50 as the standard function(s) is (are) indicated as "restricted" will be presented to the user. Note that the memory table T2 may also store information other than the above-described information, for example, user information such as user name and user address, and other various data, in association.

For example, in a case where the rental service is applied for an MFP 50 having a product serial number "A12345AAAAA" (see associated data D1 in the lowest line of the memory table T2 in FIG. 4) and the selected plan is Plan D, then in step S23, the service contract status is set to "Inactive". Further, the product name "ABC-AAAA", the plan name "Plan D", the function restricting information indicating the functions available in Plan D, and the default function information on the MFP 50 are stored in association with the product serial number. Note that the service contract status is rewritten to "Active" at the stage of product registration (step S37) which will be described later. A data storage field for the service contract status in the associated data D1 in FIG. 4 schematically indicates a process of rewriting the service providing information from "Inactive" to "Active" (step S37 to be described later).

Again, refer to FIGs. 3A and 3B. Next, the MFP 50 with all the functions restricted is delivered to the user (step S25). Note that the process of step S25 may be arranged by the operator. Upon receiving the MFP 50 as the rental product, the user uses the mobile terminal 10 to instruct the initial set-up of the MFP 50 (step S27). Specifically, the user turns on the MFP 50 and in a state that a QR code (registered trademark of DENSO WAVE INCORPORATED) linked to the set-up access destination (setup.xxxx.com) is displayed on the LCD 58 of the MFP 50, the user captures the QR code with the camera of the mobile terminal 10. The CPU 12 of the mobile terminal 10 analyzes the captured QR code, downloads the initial set-up application 30 which can execute the initial set-up of the MFP 50 from the access destination indicated by the QR code, and installs the initial set-up application 30.

Then, in a case where the user instructs the initial set-up application 30 to start, the initial set-up application 30 is started. Following a set-up guidance, the user instructs, with respect to the MFP 50, for example, to set the current time, and to execute a purge process of filling the printer part 61 with an ink(s), as appropriate. The MFP 50 executes the initial set-up (step S29).

After executing the initial set-up, the MFP 50 connects to the server 70 (step S31). After the process of step S31, the MFP 50 and the server 70 are basically continuously connected, and various data can be transmitted and received between the MFP 50 and the server 70. After the initial set-up is completed, the MFP 50 executes an identification information transmitting process (step S33). In the process of step S33, specifically, the MFP 50 transmits the product serial number of the MFP 50 to the server 70. The server 70 executes an identification information receiving process (step S35). Then, the server 70 executes product registration based on the received product serial number (step S37). Specifically, the server 70 reads out the memory table T2 stored in the memory 72, searches for the received product serial number, and changes the service contract status of the MFP 50 corresponding to the product serial number from "Inactive" to "Active" (See the associated data D1 in the lowest line of the memory table T2 in FIG. 4).

Next, the server 70 refers to the function restricting information and searches for a function which is to be unrestricted (step S39). Specifically, the server 70 picks up a function which is "unrestricted" in the function restricting information. Then, the server 70 executes an instruction transmitting process (step S41). The instruction transmission process is a process of transmitting, to the MFP 50, a setting instruction of setting the picked-up function to be enabled. In the example depicted in the associated data D1 in FIG. 4, Plan D is selected. In Plan D, the "unrestricted" functions are the scan function and the fax function. Therefore, in step S41, the server 70 transmits the setting instruction to the MFP 50 to set the scan function and the fax function to be enabled.

The MFP 50 executes an instruction receiving process of receiving the setting instruction (step S43). Then, the MFP 50 executes a setting process (step S45). The setting process is a process of performing setting so that the function(s) instructed to be set to be enabled is (are) enabled, based on the setting instruction to set the function(s) to be enabled. The MFP 50 executes a function executing process (step S47). The function executing process is a process of restricting the function(s) which is (are) not set to be enabled in the setting process and executing the function(s) set to be enabled in the setting process. For example, in the example indicated in the associated data D1 in FIG. 4, the copy function and the print function are restricted and the scan function and the fax function are executed in the function executing process, based on the operation from the user.

### Plan Changing Process

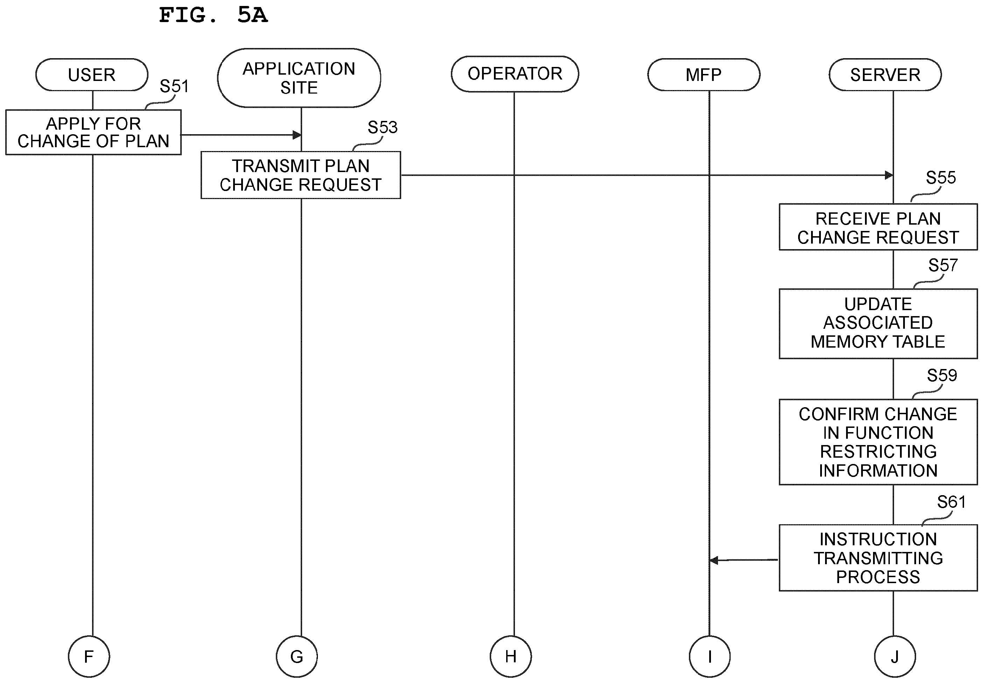

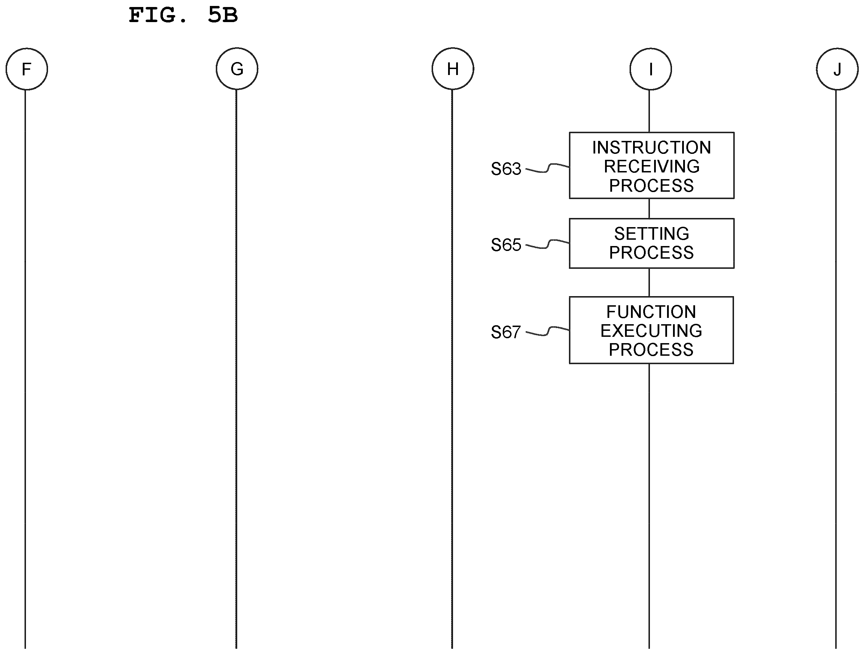

Next, a process in a case where the user applies for a change of the plan after the function executing process of step S47 is executed will be described with reference to FIGs. 5A and 5B. FIGs. 5A and 5B illustrate a flowchart indicating a plan changing process executed by the management system 1 in a case where the user applies for a change of the plan. The user uses the mobile terminal 10 to access the service application site, selects the plan to which the user wishes to change from the current plan and the product serial number, and applies for the change of the plan (step S51). The application site transmits a change request of the plan, including the product serial number, to the server 70 (step S53). The server 70 receives the change request of the plan (step S55).

In this case, the server 70 receives the change request of the plan from the application site. However, similar to the flow in step S13 and step S 19, the operator may use the terminal to access the application site, grasp the content of change of the plan from the user; after grasping the content of change of the plan from the user, the operator may use the terminal to transmit the change request of the plan to the server 70. Alternatively, the change request of the plan may be transmitted from the mobile terminal 10 of the user directly to the server 70.

Upon receiving the change request of the plan, the server 70 updates the memory table T2 based on the content of the received change request (step S57). For example, such a case is presumed wherein the user of product serial number "A12345ZZZZZ" wishes to newly use the fax function, and requests the change of plan from Plan C to Plan B. In this presumed case, in the memory table T2, the plan name corresponding to the corresponding product serial number is rewritten from "Plan C" to "Plan B", and further, the function restricting information about the fax function is changed from "restricted" to "unrestricted".

After updating the memory table T2, the server 70 confirms the change in the function restricting information (step S59) and executes the instruction transmitting process in accordance with the content of the change (step S61). Namely, the server 70 transmits, to the MFP 50, a setting instruction based on the function restricting information corresponding to the changed Plan B. The MFP 50 executes an instruction receiving process of receiving the setting instruction (step S63), and executes the setting process (step S65). The MFP 50 then executes the function executing process (step S67). The instruction receiving process of the setting instruction (step S63), the setting process (step S65) and the function executing process (step S67) can be executed in a manner similar to the manner in each of step S43, step S45, and step S47 as described above. For example, in the above-described example, since the restriction of the fax function is released by the setting instruction and the fax function is set to be enabled in the setting process, the user can use, in the function executing process, the fax function available in the changed Plan B.

### Notifying Process Based on Usage History

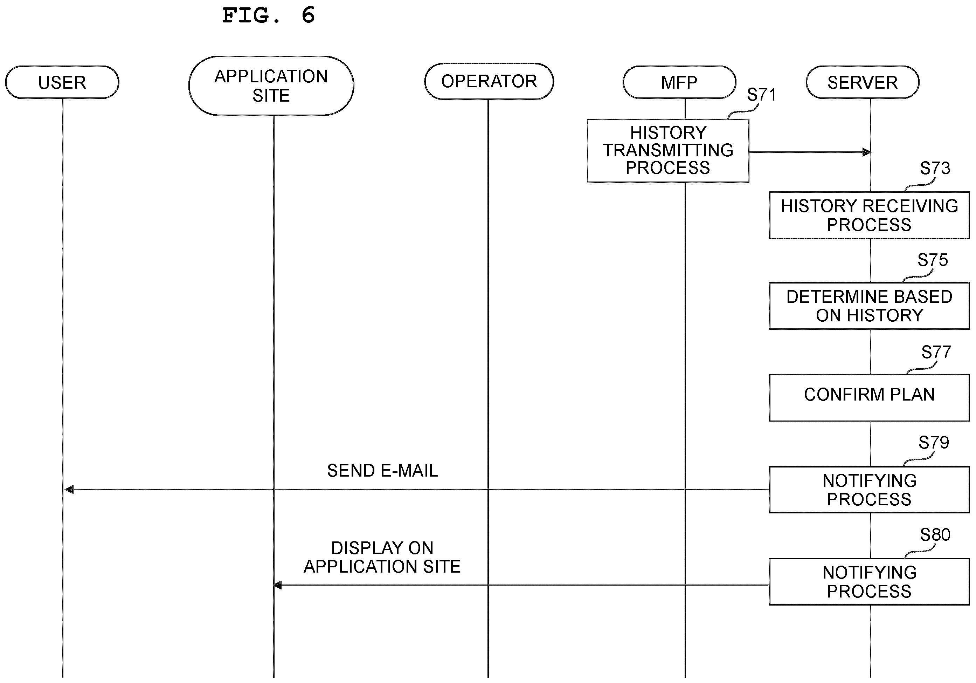

Next, a notifying process in which the server 70 notifies the user of a plan which matches a usage aspect by the user based on usage history of each of the functions of the MFP 50 will be described with reference to FIG. 6. FIG. 6 illustrates a flowchart indicating the notifying process based on the usage history of each of the functions of the MFP 50. The process depicted in FIG. 6 is periodically executed at a predetermined interval after the function executing process of step S47 or step S67 is executed in a state that the MFP 50 and the server 70 are connected in the process of step S31 as described above.

The MFP 50 executes a history transmitting process including the product serial number and the usage history (step S71). The history transmitting process is a process of transmitting, to the server 70, the usage history of each of the functions executed in the function execution process. The server 70 executes a history receiving process of receiving the usage history (step S73). The server 70 associates the received usage history with the product serial number and stores the associated usage history in the memory 72. Further, in a case where the usage history accumulated in the memory 72 reaches a predetermined data amount, the server 70 determines whether the current plan in relation to the MFP 50 is optimal for the user, based on the accumulated usage history and the memory table T2 (step S75). Specifically, the server 70 refers to the usage history associated with the product serial number of the MFP 50 in the storage table T2, with respect to a certain function of the function(s) set as "unrestricted" in the function restriction information associated with the product serial number of the MFP 50. Further, in a case where a condition is satisfied, for example, that the certain function has not been used for a certain period of time (e.g., one month) in the past, or that usage frequency of the certain function is at or below a predetermined threshold value, the server 70 determines that the current plan is not optimal for the user. That is, in a case where the usage frequency of the certain function based on the usage history is lower than a predetermined reference, the server 70 determines that the user needs to be notified that another plan which does not use the certain function, i.e., another plan which restricts the certain function, is optimal for the user.

After the determination in step S75, the server 70 refers to the memory table T1 and confirms a plan not using a function of which usage frequency based on the usage history is lower than the predetermined reference (step S77). Then, the server 70 executes a notifying process of notifying the user of the plan not using the function (step S79, step S80). The server 70 may execute the notifying process by performing the notification directly with respect to the mobile terminal 10 of the user via, for example, e-mail (step S79), or the server 70 may perform the notifying process by displaying the content of the notifying process on the application site (step S80). Alternatively, other than the manner as described above, the server 70 may execute the notifying process by causing the LCD 58 of the MFP 50 to display the content of the notifying process. In a case where, in the determination in step S75, the current plan has no functions of which usage frequency based on the usage history is lower than the predetermined reference and the current plan does not need to be changed, the server 70 does not execute the process in each of step S77, step S79, and step S80, and the server 70 ends the process indicated in FIG. 6. The notified user can change the current plan to the notified plan, for example, by executing an application for change of the plan in the plan changing process in FIGs. 5A and 5B.

### Supporting Process Based on Error Information

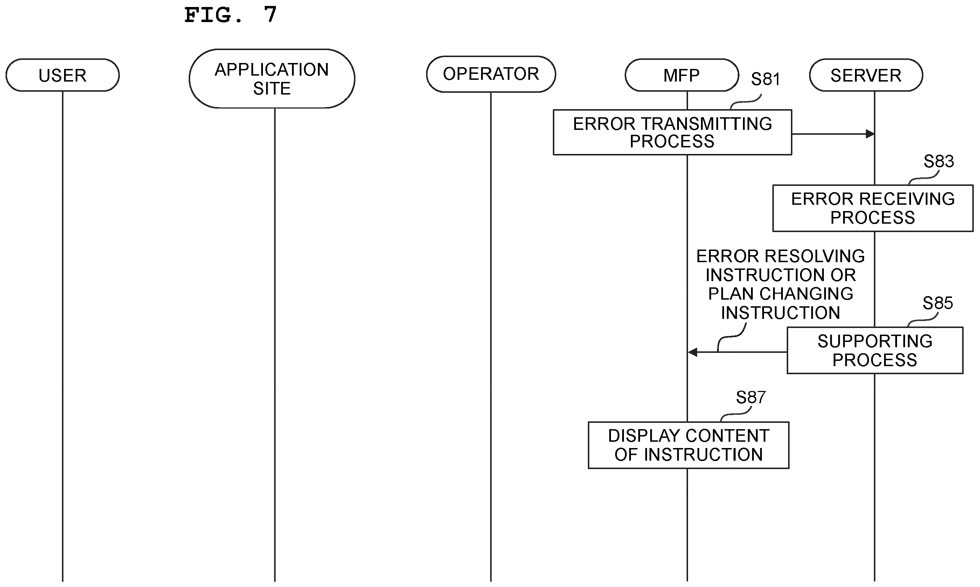

Next, a supporting process based on error information on each of the functions of the MFP 50 will be described with reference to FIG. 7. The supporting process is a process of transmitting at least one of an error resolving instruction or a plan changing instruction from the server 70 to the MFP 50 based on the error information which is information on an error regarding a function of the MFP 50. FIG. 7 illustrates a flowchart indicating the supporting process based on the error information on each of the functions of the MFP 50. The process indicated in FIG. 7 is periodically executed at a predetermined interval after the function executing process of step S47 in the state that the MFP 50 and the server 70 are connected in step S31 as described above.

The MFP 50 executes an error transmitting process including the product serial number (step S81). The error transmitting process is a process of transmitting, to the server 70, the error information regarding a certain function in which an error occurs in the function executing process. The "error information" includes information as to whether the error occurring in the certain function is an "unrecoverable error" which is an error unrecoverable even with a countermeasure to the error performed by the user, or is a "recoverable error" which is an error recoverable by the countermeasure to the error performed by the user.

The recoverable error is, for example, an error such as a main body cover (not depicted in the drawings) of the MFP 50 being left open, a paper jam, or no paper being loaded. Such errors can be easily resolved by the user, allowing the MFP 50 to return to a printable state. On the other hand, the unrecoverable error is, for example, an error caused by a failure in a component of the MFP 50 that cannot be restored to the normal state even in a case where the user performs the process for the error. Specific examples of the unrecoverable error are, for example, waste liquid stored in a waste liquid tank (not depicted in the drawings) being in a full state, a failure in reading from or writing to the memory 54, an exchange request of a platen (not depicted in the drawings), and an abnormal value of the voltage applied to the head (not depicted in the drawings), etc.

The server 70 executes an error receiving process of receiving the error information (step S83). Next, the server 70 executes the supporting process regarding the function, in which the error occurs, based on the received error information (step S85). The supporting process is a process of transmitting, to the MFP 50, at least one of the error resolving instruction urging the user to resolve the error, or the plan changing instruction urging the user to change the plan. For example, in a case where the error is a recoverable error, the server 70 transmits the error resolving instruction to the MFP 50 having the product serial number transmitted in the error transmitting process of step S81. On the other hand, in a case where the error is an unrecoverable error, the server 70 transmits, to the MFP 50 having the product serial number transmitted in the error transmitting process of step S81, the plan changing instruction urging the user to change the current plan to a plan which does not include the function in which the error occurs. Note that in the supporting process (step S85), the server 70 may directly notify the mobile terminal 10 of the user of at least one of the error resolving instruction or the plan changing instruction via, for example, e-mail, or the server 70 may display at least one of the error resolving instruction or the plan changing instruction on the application site. The MFP 50 displays the content of the error resolving instruction or the plan changing instruction, transmitted in the supporting process, on the display screen of the LCD 58 (step S87). Note that the contact information including, for example, telephone number or e-mail address of a support center may be displayed as the error resolving instruction.

The management system 1 of the above-described embodiment has the following actions and effects by including the above-described configuration.

In the management system 1 of the above-described embodiment, the server 70 executes the instruction transmitting process (step S41, step S61) of transmitting, to the MFP 50 via the network I/Fs 56 and 73, the setting instruction for setting the function(s), of the plurality of plans included in the service, corresponding to the plan for which the user has applied, to be enabled. Then, the MFP 50 executes the instruction receiving process (step S43, step S63) of receiving the setting instruction via the network I/Fs 56 and 73. Further, based on the received setting instruction, the MFP 50 executes the setting process (step S45, step S65) of setting the function(s) to be enabled in accordance with the plan.

In other words, among the plurality of functions included in the MFP 50, the function(s) corresponding to the plan for which the user has applied is (are) set to be enabled, and thus the function(s) based on the content of the plan can be appropriately set to be enabled. In other words, the function(s) to be set to be enabled can be switched appropriately in accordance with the plan for which the user applied.

In the management system 1 of the above-described embodiment, the server 70 executes the identification information receiving process (step S35) of receiving the product serial number via the network I/Fs 56 and 73. Further, in the instruction transmitting process (step S41), in response to receiving the product serial number in the identification information receiving process, the server 70 reads out the memory table T2 stored in the memory 72, and transmits, to the MFP 50, the setting instruction based on the product serial number, the plan name, and the function restricting information. Accordingly, based on the information stored in the memory 72 of the server 70, the function(s) in accordance with the plan can be easily set to be enabled.

In the management system 1 of the above-described embodiment, the server 70 executes the plan receiving process (step S21) of receiving the plan name via the network I/Fs 56, 73. Further, in the instruction transmitting process (step S41, step S61), in response to receiving the plan name in the plan receiving process (step S21), the server 70 transmits the setting instruction to the MFP 50 in the instruction transmitting process (step S41, step S61), based on the function restricting information associated with the plan corresponding to the plan. Accordingly, based on the information stored in the memory 72 of the server 70, the function(s) in accordance with the plan can be easily set to be enabled.

In the management system 1 of the above-described embodiment, in a case where the server 70 receives the change request of the plan (step S55), the server 70 transmits, to the MFP 50, the setting instruction based on the function restricting information associated with the plan name corresponding to a changed plan, in the instruction transmitting process (step S61). Accordingly, the function(s) to be set to be enabled in the MFP 50 can be switched in accordance with the change of the plan by the user.

In the management system 1 of the above-described embodiment, the MFP 50 executes the function executing process (step S47, step S67) of restricting the function(s) set to be disabled in the setting process and executing the function(s) set to be enabled in the setting process (step S45, step S65). Further, the MFP 50 executes the history transmitting process (step S71) of transmitting the usage history of the function(s) to the server 70 via the network I/Fs 56 and 73. Then, the server 70 executes the history receiving process (step S73) of receiving the usage history of the function(s) via the network I/Fs 56 and 73. Further, the server 70 executes the notifying process (step S79, step S80) of notifying the user of a plan not using a certain function in a case where the usage frequency of the certain function based on the usage history of the certain function set to be enabled in MFP 50 is lower than the predetermined reference.

By notifying the user of a plan which does not have the function(s) of which usage frequency is low in the MFP 50 as the object to be used, a plan which matches the actual usage of the function(s) can be proposed to the user, thereby improving the convenience for the user.

In the management system 1 of the above-described embodiment, the server 70 executes the instruction transmitting process (step S41) on the condition that the set-up of the MFP 50 is completed. Accordingly, after the set-up of the MFP 50 is completed, the function(s) in accordance with the plan can be set to be enabled.

In the management system 1 of the above-described embodiment, the MFP 50 error transmitting process (step S81) of transmitting the error information on the function(s) executed in the function executing process (step S47, step 67) to the server 70 via the network I/Fs 56 and 73. Further, the server 70 executes the error receiving process (step S83) of receiving the error information via the network I/Fs 56 and 73, and executes the supporting process (step S85). In the supporting process (step S85), the server 70 notifies the user of the error resolving instruction or the plan changing instruction (step S87). Accordingly, based on the error resolving instruction, the user can execute the process of resolving the error occurring in the MFP 50. Alternatively, based on the plan changing instruction, the user can consider applying for another plan different from the plan for which the user currently applies.

In the management system 1 of the above-described embodiment, in a case where the error occurring in the MFP 50 is an unrecoverable error that cannot be resolved by the user performing the process for the error, the server 70 transmits, in the supporting process (step S85), the plan changing instruction urging the user to change to a plan which does not include the function in which the error occurs. With respect to the function in which the error that is unresolvable by the user performing the process for the error is occurring, the recovery to the normal state cannot be performed promptly, and thus the plan using such function is not appropriate. Owing to the above-described configuration, the user is urged to change to a plan not including the function in which the error occurs, and thus the user can consider changing the plan, which in turn improves the convenience for the user.

### Other Embodiments

In the management system 1 of the above-described embodiment, the operator executes the plan transmitting process (step S19). However, the plan name may be transmitted directly from the user to the server 70 as the information on the plan, not via the application site or the operator. Further, in addition to the plan name, the identification information on the MFP 50 may also be transmitted directly from the user to the server 70. Furthermore, various information may be transmitted from the user to the server 70 via another server which is different from the server 70. In other words, the server 70 may receive various information, regardless of the source of transmission.

In the management system 1 of the above-described embodiment, after the user has applied for the service and selected the plan (step S11), the operator restricts all the functions of the MFP 50 which the user wishes to rent (step S15). However, in a case where the functions of the MFP 50 which the user wishes to rent have been disabled in advance, the process of step S15 may be omitted. The above-described service is not limited to the rental service for the MFP 50 itself, but may also be a service for a purchased MFP 50.

In the management system 1 of the above-described embodiment, the plurality of functions executable by the MFP 50 are the four kinds of image processing functions, but the present disclosure is not limited to these four functions. The functions may include, for example, a remote print function using a cloud server, a layout copy function, and an ID card copy function.

In the management system 1 of the above-described embodiment, in the supporting process (step S85), in a case where the error is recoverable, the server 70 transmits the error resolving instruction to the MFP 50; whereas in a case where the error is an unrecoverable error, the server 70 transmits the plan changing instruction to the MFP 50. Alternatively, the server 70 may transmit, to the MFP 50, the plan changing instruction, regardless of whether the error is an unrecoverable error or a recoverable error. Still alternatively, the server 70 may transmit, to the MFP 50, both the error resolving instruction and the plan changing instruction, regardless of the kind of error. Furthermore, the server 70 may transmit, to the MFP 50, the plan changing instruction on the condition that the error has been occurring for a certain period of time or longer.

In the management system 1 of the above-described embodiment, various pieces of information such as the identification information on the MFP 50, the plan name, the function restricting information on the plan are stored in the memory 72 of the server 70 (see FIG. 2 and FIG. 4). However, these pieces of information as described above may be stored, for example, in another memory included in another server which is different from server 70.

In the management system 1 of the above-described embodiment, the MFP 50 executes the history transmitting process (step S71) and the error transmitting process (step S81) in the different process steps. In the management system 1, however, the MFP 50 may execute the history transmitting process (step S71) and the error transmitting process (step S81) at the same time. In other words, the MFP 50 may be configured to transmit the usage history and the error information to the server 70 at the same time while the MFP 50 and the server 70 are continuously connected.

The management system 1 of the above-described embodiment may be configured not to execute any one or all of the plan changing process (FIGs. 5A and 5B), the notifying process based on the usage history (FIG. 6), and the supporting process based on the error information (FIG. 7).

The configuration of the management system 1 of the above-described embodiment may be modified as appropriate. For example, the server 70 may be constructed of a plurality of physical servers. One physical server may be divided by a virtualization software into a plurality of virtual servers, and the server 70 may be constructed of at least one virtual server of the plurality of virtual servers.

The present disclosure is not limited to the above-described embodiments, and can be realized in various configurations within a range not departing from the spirit of the present disclosure. For example, the technical feature in each of the above-described aspects corresponding to a corresponding one of the technical features described in the "SUMMARY" section of the present specification may be replaced or combined as appropriate to resolve a part or all of the above-described problem, or to achieve a part or all of the above-described effects. Further, in a case where a certain technical feature is not described as being indispensable in the specification, such a technical feature can be deleted as appropriate.

### Reference Signs List:

1: management system, 10: mobile terminal, 16: network I/F (communication interface), 56: network I/F (communication interface), 70: service providing server (server), 72: memory, 73: network I/F (communication interface)

## Claims

1. A management system comprising:
a multi-function peripheral;
a server, a service related to the multi-function peripheral being managed by the server, and the service including a plurality of plans; and
a communication interface,
wherein the server is configured to execute an instruction transmitting process of transmitting, to the multi-function peripheral via the communication interface, a setting instruction to set at least one function of the multi-function peripheral to be enabled in accordance with a plan, of the plurality of plans, for which a user of the multi-function peripheral applied, and
the multi-function peripheral is configured to execute:
an instruction receiving process of receiving the setting instruction transmitted in the instruction transmitting process, via the communication interface; and
a setting process of setting the at least one function to be enabled, based on the setting instruction received in the instruction receiving process.

2. The management system according to claim 1, further comprising a memory, wherein
the memory stores multi-function peripheral identification information identifying the multi-function peripheral, plan information indicating the plan for the multi-function peripheral identified by the multi-function peripheral identification information, and function information indicating a function available in the plan,
the server is configured to execute an identification information receiving process of receiving the multi-function peripheral identification information via the communication interface, and
in a case where the server receives the multi-function peripheral identification information in the identification information receiving process, the server is configured to transmit the setting instruction to the multi-function peripheral in the instruction transmitting process, based on the multi-function peripheral identification information, the plan information, and the function information stored in the memory.

3. The management system according to claim 1 or 2, further comprising a memory, wherein
the memory stores a plurality of plan information items and a plurality of function information items in association, each of the plurality of plan information items indicating a corresponding one of the plurality of plans, each of the plurality of function information items indicating a function available in a corresponding one of the plurality of plans,
the server is configured to execute a plan receiving process of receiving information on the plan via the communication interface, and
in a case where the server receives the information on the plan in the plan receiving process, the server is configured to transmit, to the multi-function peripheral, the setting instruction based on a function information item associated with a plan information item indicating the plan.

4. The management system according to claim 3, wherein, in a case where the server receives a change request of the plan in the plan receiving process, the server is configured to transmit the setting instruction to the multi-function peripheral in the instruction transmitting process, based on a function information item associated with a plan information item indicating a changed plan.

5. The management system according to any of claims 1 to 4, wherein
the multi-function peripheral is configured to execute:
a function executing process of restricting a function of the multi-function peripheral not set to be enabled in the setting process and executing the at least one function of the multi-function peripheral set to be enabled in the setting process; and
a history transmitting process of transmitting usage history of the at least one function executed in the function executing process to the server via the communication interface, and
the server is configured to execute:
a history receiving process of receiving the usage history transmitted in the history transmitting process, via the communication interface; and
a notifying process of notifying the user of a plan, of the plurality of plans, not using the at least one function, in a case where usage frequency based on the usage history of the at least one function is lower than a predetermined reference.

6. The management system according to any of claims 1 to 5, wherein the server is configured to execute the instruction transmitting process on a condition that set-up of the multi-function peripheral is completed.

7. The management system according to any of claims 1 to 6, wherein
the multi-function peripheral is configured to execute:
a function executing process of restricting a function of the multi-function peripheral not set to be enabled in the setting process and executing the at least one function of the multi-function peripheral set to be enabled in the setting process; and
an error transmitting process of transmitting error information on an error regarding the at least one function executed in the function executing process, to the server via the communication interface, and
the server is configured to execute:
an error receiving process of receiving the error information transmitted in the error transmitting process, via the communication interface; and
a supporting process of transmitting at least one of an error resolving instruction urging the user to resolve the error or a plan changing instruction urging the user to change the plan to the multi-function peripheral via the communication interface, based on the error information received in the error receiving process.

8. The management system according to claim 7, wherein in a case where the error is unresolvable by the user, the server is configured to transmit, in the supporting process, the plan changing instruction urging the user to change the plan to a plan not including the at least one function.

9. The management system according to any of claims 1 to 8, wherein the multi-function peripheral is configured to execute a function regrading image processing.

10. A server for managing a service related to a multi-function peripheral, the service including a plurality of plans, in a management system including the multi-function peripheral and a communication interface, the server being configured to execute:
an instruction transmitting process of transmitting, to the multi-function peripheral via the communication interface, a setting instruction to set at least one function of the multi-function peripheral to be enabled according to a plan, of the plurality of plans, for which a user of the multi-function peripheral applied.

11. A multi-function peripheral included in a management system, the management system comprising: a server for managing a service related to the multi-function peripheral, the service including a plurality of plans; and a communication interface, the multi-function peripheral being configured to execute:
an instruction receiving process of receiving a setting instruction transmitted from the server via the communication interface, the setting instruction being an instruction to the multi-function peripheral to set at least one function of the multi-function peripheral to be enabled in accordance with a plan, of the plurality of plans, for which a user of the multi-function peripheral applied; and
a setting process of setting the at least one function to be enabled, based on the setting instruction received in the instruction receiving process.
